# EUROPEAN PATENT SPECIFICATION

(11) **EP 4 238 871 B1**
(45) Date of publication and mention of the grant of the patent: **17.04.2024**
(21) Application number: 23154928.8
(22) Date of filing: 03.02.2023
(51) Int. Cl.: B64D 27/24, B64D 35/02, H02P 27/06, B64D 31/00

(54) **ELECTRIC AIRCRAFT PROPULSION ASSEMBLY AND METHOD**
ELEKTRISCHE FLUGZEUGANTRIEBSANORDNUNG UND VERFAHREN
ENSEMBLE PROPULSIF ÉLECTRIQUE D'AÉRONEF ET PROCÉDÉ

(30) Priority: 02.03.2022 GB 202202861
(43) Date of publication of application: 06.09.2023
(73) Proprietor: Rolls-Royce plc, London N1 9FX (GB)
(72) Inventor: Trainer, David, Derby, DE24 8BJ (GB); Chivite Zabalza, Francisco Javier, Derby, DE24 8BJ (GB); Chong, Ellis, Derby, DE24 8BJ (GB)
(74) Representative: Rolls-Royce plc

(56) References cited:
- US-A1- 2015 202 978
- US-B1- 11 128 251
- US-B2- 9 868 355
- US-B2- 10 017 264
- US-B2- 11 233 470

## Description

### Technical Field

This disclosure relates to an electric aircraft propulsion assembly for an electric vertical takeoff and landing (eVTOL) aircraft and operation thereof.

### Background

Battery powered electric aircraft propulsion systems are currently being developed for short range applications, for example up to around 100 miles. Such aircraft may be configured for electric vertical takeoff and landing (eVTOL). Batteries in such aircraft may be charged on the ground with a large proportion of the stored energy then used during the flight. It is important therefore that the stored energy is used with maximum efficiency. These small distance aircrafts are commonly termed Urban Air Mobility (UAM) aircraft.

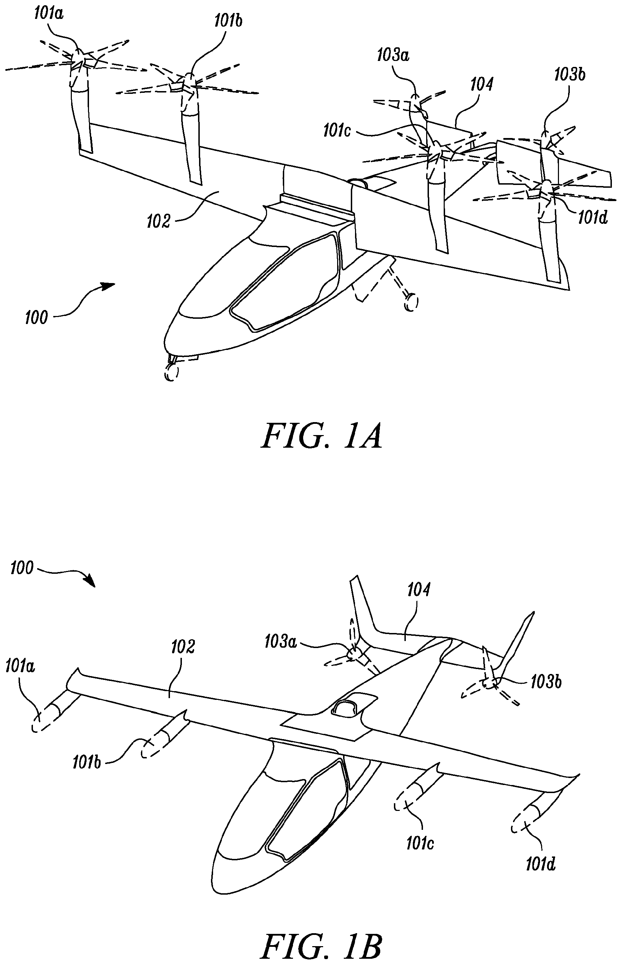

Various UAM platform configurations have been proposed, examples including multi-copter designs and tilt rotor designs. Figures 1a and 1b illustrate an example tilt rotor design for a UAM aircraft. The aircraft 100 includes a front set of four rotors 101a-d coupled to a wing 102 and a rear set of two rotors 103a, 103b coupled to a rear surface 104. Both the wing and rear surface are tiltable between a VTOL configuration shown in Figure 1a and a forward/horizontal flight (or cruise) configuration shown in Figure 1b. The propellers of the front rotors 101a-d are not shown in Figure 1b, indicating that during cruise flight only some of the propellers may be active, for example the propellers drive by the rear two rotors 103a, 103b. The front propellers may be active only during takeoff and landing and deactivated during cruise flight.

In other proposed platforms the rear rotors do not tilt but are dedicated to providing lift for VTOL and remain idle during cruise while the front rotors are tiltable between VTOL and cruise configurations. Other designs may incorporate dedicated cruise rotors that are idle during VTOL. Further designs may not have front and rear rotors but instead have multiple sets of rotors of which one or more sets are dedicated to one of the two flight phases and idle during the other of the two flight phases.

Aircraft propulsion systems for applications such as those mentioned above may be powered directly from battery storage, relying on the available voltage. This tends to reduce as the stored energy is depleted, which can result in the DC voltage available for power varying by a factor of, e.q., two or more. In a typical application, the voltage may vary between around 900V when fully charged down to around 450V when depleted. Operating at a reduced voltage results in a need for a higher current to achieve the same power, requiring higher current rated electrical connections and/or potentially higher electrical losses. This can be counteracted through using DC:DC converters to boost the voltage as the battery voltage is reduced, but adding such converters adds weight to the aircraft. US 11233470, US 9868355, US 2015/202978 disclose electric aircraft propulsion assemblies.

### Summary

According to a first aspect there is provided an electric aircraft propulsion assembly comprising:
an electric storage unit;
a first electric motor connected to power a first propulsor;
a first converter configured as a DC:AC converter having input connections connectable to the electric storage unit and output connections connected across the first electric motor, the first converter configured to convert a DC supply across the input connections to an AC supply across the output connections;
a second electric motor connected to power a second propulsor;
a second converter connected between the first converter input connections and the second electric motor; and
a controller configured to control operation of the first and second converters,
wherein the second converter is switchable between: a first configuration in which the second converter is configured as a DC:AC converter to convert the DC supply from the electric storage unit to an AC supply across the second electric motor; and a second configuration in which the second converter is configured as a DC:DC converter to convert the DC supply from the electric storage unit at a first DC level to a DC supply at the input connections of the first converter at a second DC level.

An advantage of the second converter being switchable between DC:AC and DC:DC configurations is that the second converter can be re-utilised as a DC:DC converter to maintain the supply voltage to the first electric motor when the second electric motor is not being operated. This reduces the need for adding a separate DC:DC converter to maintain the supply voltage, thereby reducing the need for additional weight due to re-utilising existing hardware during cruise flight that would otherwise not be operational. The second DC level may be higher than the first DC level.

The second converter may comprise a switching circuit connected between input terminals of the second converter, a first terminal of the electric storage unit being connected to the switching circuit via an inductor when the second converter is in the second configuration and to a first one of the input terminals when the second converter is in the first configuration.

The inductor may be provided by one or more stator windings of the second electric motor.

The electric aircraft propulsion assembly may further comprise a switching arrangement that, in a first configuration, connects the first terminal of the electric storage unit to the first input terminal of the second converter and, in a second configuration, connects the first terminal of the electric storage unit to the switching circuit via the inductor, the controller configured to operate the switching arrangement to switch the second converter between the first and second configurations.

The second electric motor may comprise a plurality of windings and the second converter a respective plurality of switching circuits and first and second input terminals, the assembly further comprising a switching arrangement that, in a first configuration, connects a first terminal of the electric storage unit to the first input terminal of the second converter when the second converter is in the first configuration and, in a second configuration, connects the first terminal of the electric storage unit to a node common to the plurality of windings, a second terminal of the electric storage unit remaining connected to the second input terminal.

The switching arrangement may comprise a switch operable between a first position in the first configuration and a second position in the second configuration. The switching arrangement may alternatively be configured in the second configuration to enable a first DC: DC configuration in which the first terminal of the battery is connected to the second converter via the plurality of motor windings and a second DC:DC configuration in which the input terminal is connected to the second converter via the plurality of motor windings.

In a particular example, the switching arrangement comprises first, second, third and fourth switches, wherein the first switch switchably connects the first terminal of the battery to the node common to the plurality of windings of the motor, the second switch switchably connects the first terminal to a first side of the fourth switch, a second side of the fourth switch being connected to the first input terminal of the converter, and the first input terminal is switchably connected to the node with the third switch.

Each of the plurality of switching circuits may comprise a pair of switches, a node between each pair of switches being connected to a respective one of the plurality of windings.

One or more of the plurality of windings may comprise a pair of parallel windings. One or more of the pairs of parallel windings may be switchably connectable together.

Each of the plurality of switching circuits may comprise an H-bridge converter connected to a respective one of the plurality of windings.

According to a second aspect there is provided an electric vertical takeoff and landing, eVTOL, aircraft comprising an electric aircraft propulsion assembly according to the first aspect, wherein the aircraft is configured to operate in the first configuration to provide lift from the second propulsor and in the second configuration to provide forward thrust from the first propulsor.

Both the first propulsor and the second propulsor may provide lift in the first configuration.

The eVTOL aircraft may comprise a plurality of the electric aircraft propulsion assemblies, wherein the aircraft is configured to operate in the first configuration to provide lift from each of the second propulsors and in the second configuration to provide forward thrust from the first propulsors.

According to a third aspect there is provided a method of operating an electric aircraft propulsion assembly comprising:
an electric storage unit;
a first electric motor connected to power a first propulsor;
a first converter configured as a DC:AC converter having input connections connectable to the electric storage unit and output connections connected across the first electric motor, the first converter configured to convert a DC supply across the input connections to an AC supply across the output connections;
a second electric motor connected to power a second propulsor;
a second converter connected between the first converter input connections and the second electric motor; and
a controller configured to control operation of the first and second converters,
the method comprising:
   operating the controller in a first mode in which the second converter is configured as a DC:AC converter to convert the DC supply from the electric storage unit to an AC supply across the second electric motor; and
   operating the controller in a second mode in which the second converter is configured as a DC: DC converter to convert the DC supply from the electric storage unit at a first DC level to a DC supply at the input connections of the first converter at a second DC level.

The second electric motor may comprise a plurality of windings and the second converter a respective plurality of switching circuits and first and second input terminals, the assembly further comprising a switching arrangement that, in a first configuration, connects a first terminal of the electric storage unit to the first input terminal of the second converter when the second converter is in the first configuration and, in a second configuration, connects the first terminal of the electric storage unit to a node common to the plurality of windings, a second terminal of the electric storage unit remaining connected to the second input terminal, the controller in the first mode operating the switching arrangement in the first configuration and operating the plurality of switching circuits as a DC:AC converter to convert the DC supply across the terminals of the electric storage unit to an AC supply across the first and second terminals of the second converter, and in the second mode operating the switching arrangement in the second configuration and operating the plurality of switching circuits as a DC:DC converter to convert the first DC level across the terminals of the electric storage unit to the second DC voltage level across the first and second terminals of the second converter.

The plurality of switching circuits may each comprise a pair of switches, a node between each pair of switches being connected to a respective one of the plurality of windings.

Each winding of the plurality of windings may comprise a pair of parallel windings, one or more of the pairs of parallel windings being switchably connected together by the controller operating in the first mode and switchably separated by the controller operating in the second mode.

Each of the plurality of switching circuits may comprise an H-bridge converter connected to a respective one of the plurality of windings.

The second DC voltage level may be higher than the first DC voltage level.

### Brief Description of the Drawings

Embodiments will now be described by way of example only with reference to the accompanying drawings, which are purely schematic and not to scale, and in which:
**Figure 1a** is a representation of an example electric aircraft in a vertical takeoff configuration;
**Figure 1b** is a representation of the electric aircraft of Figure 1a in a forward flight, or cruise, configuration;
**Figure 2** is a schematic diagram illustrating a plurality of battery-powered aircraft propulsion assemblies;
**Figure 3** is a schematic diagram of an example electric aircraft propulsion assembly;
**Figure 4** is a schematic diagram of an example second converter and second electric motor of an electric aircraft propulsion assembly;
**Figure 5** is a schematic diagram of an alternative example second converter and second electric motor of an electric aircraft propulsion assembly;
**Figure 6** is a simplified schematic diagram of an example second converter and second electric motor of an electric aircraft propulsion assembly;
**Figure 7** is a schematic diagram of an alternative example second converter and second electric motor of an electric aircraft propulsion assembly;
**Figure 8** is a schematic diagram of an alternative example second converter and second electric motor of an electric aircraft propulsion assembly;
**Figure 9** is a schematic diagram of an alternative example second converter and second electric motor of an electric aircraft propulsion assembly;
**Figure 10** is a schematic diagram of an alternative example second converter and second electric motor of an electric aircraft propulsion assembly;
**Figure 11** is a schematic diagram of an alternative example second converter and second electric motor of an electric aircraft propulsion assembly;
**Figure 12** is a schematic diagram of an alternative example second converter and second electric motor of an electric aircraft propulsion assembly;
Figures 13A-C are schematic diagrams of an alternative example second converter and second electric motor of an electric aircraft propulsion assembly, comprising an alternative switch arrangement and
**Figure 14** is a schematic diagram illustrating a method of operating an electric aircraft propulsion assembly.

### Detailed Description

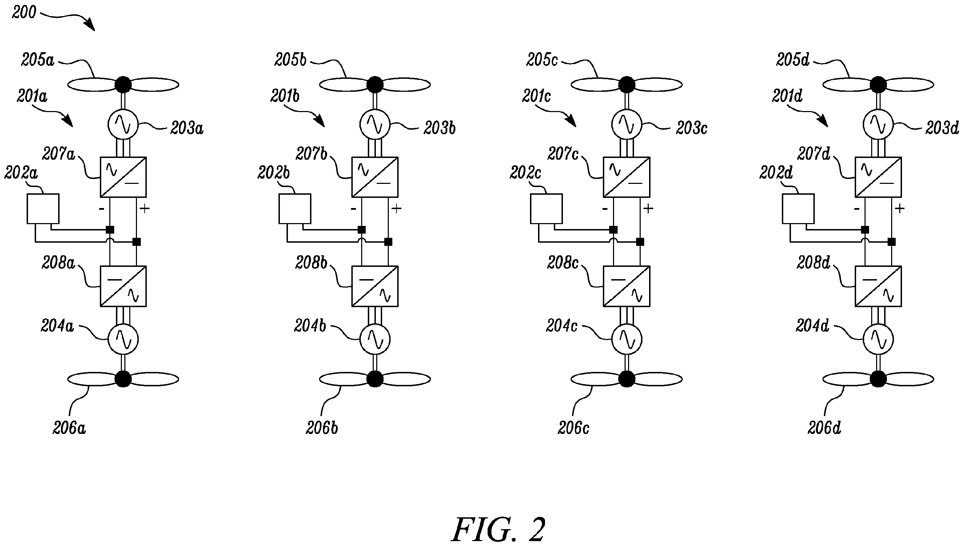

Figure 2 shows an example arrangement of a multi-channel electric aircraft propulsion system 200 comprising four electric propulsion assemblies 201a-d. Each assembly 201a-d comprises a battery 202a-d as the primary source of electrical power for first and second electric motors 203a-d, 204a-d driving corresponding first and second propulsors 205a-d, 206a-d. The first propulsor 205a-d may for example be a forward propulsor and the second propulsor 206a-d a rear propulsor. The battery 202a-d in each assembly 201a-d provides electric power to both motors via first and second DC:AC converters 207a-d, 208a-d. The first motors 203a-d may for example be responsible for vertical lift during takeoff and landing and the second motors 204a-d responsible for forward, or cruise, motion. The propulsors 205a-d responsible for lift may be mechanically locked to prevent rotation once the aircraft is operating in its forward flight or cruise mode.

In this arrangement, the battery 202a-d provides power to both sets of DC:AC converters 207a-d. 208a-d. The voltage provided by the battery 202a-d reduces as the battery discharges its stored energy during flight, requiring more current to be provided for the same power, resulting in higher losses.

The system 200 in Figure 2 illustrates a typical power system architecture for a UAM aircraft application. Other features may also be present, for example switched power connections between channels to enable reconfiguration such that, for example in a fault condition, a battery in one channel is able to provide electrical power to another channel. Each propulsion motor may also have two or more sets of independent windings, each supplied from a separate DC:AC converter to improve reliability and availability. The basic principles of such a multi-channel system architecture and associated power sources are, however, present in the system 200 as illustrated in Figure 2.

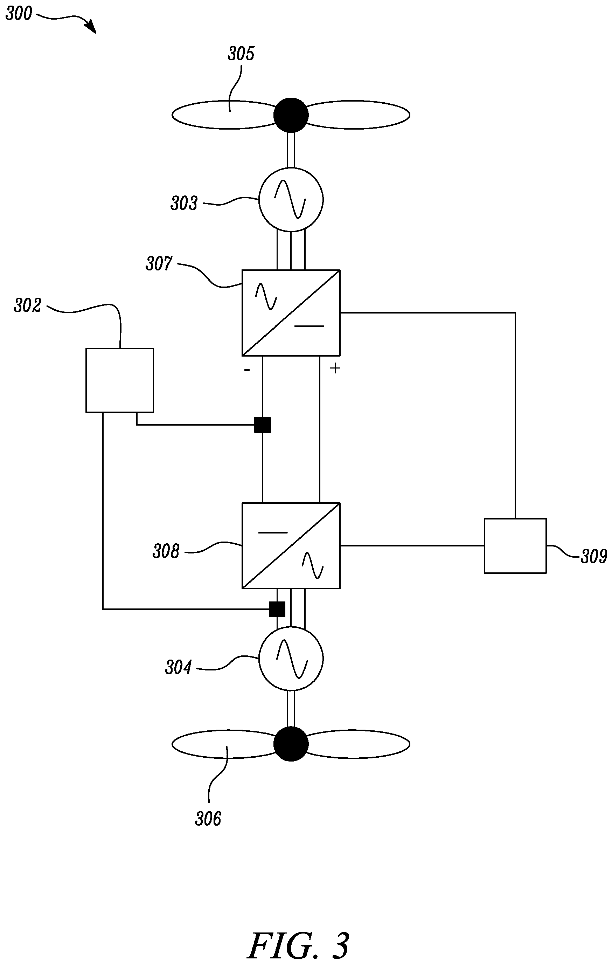

For prolonged periods during flight, some of the converters and motors will be non-operational, for example the rear converters 208a-d and motors 204a-d. The corresponding propulsors 206a-d may be locked in position during cruise flight while the forward motors 203a-d drive the forward propulsors 205a-d. The second converters 208a-d may therefore be re-utilised if configured to operate during cruise flight as DC:DC converters instead. Figure 3 illustrates an example electric aircraft propulsion assembly 300 in such a configuration. The assembly comprises an electric storage unit 302, e.g., a battery, a first electric motor 303 connected to power a first propulsor 305, a first converter 307 configured as a DC:AC converter, a second electric motor 304 connected to power a second propulsor 306 and a second converter 308. In the illustrated configuration, the second converter 308 is configured as a DC:DC converter to convert the DC supply from the electric storage unit 302 at a first DC level, i.e. the voltage across the terminals of the electric storage unit 302, to a second higher DC level at the inputs of the first converter 307. The first converter 307 and first electric motor 303 can thereby be driven at a supply voltage higher than that able to be provided by the electric storage unit 302 directly. The assembly 300 comprises a controller 309 connected to the first and second converters 307, 308, the controller 309 being configured to control operation of the converters 307, 308.

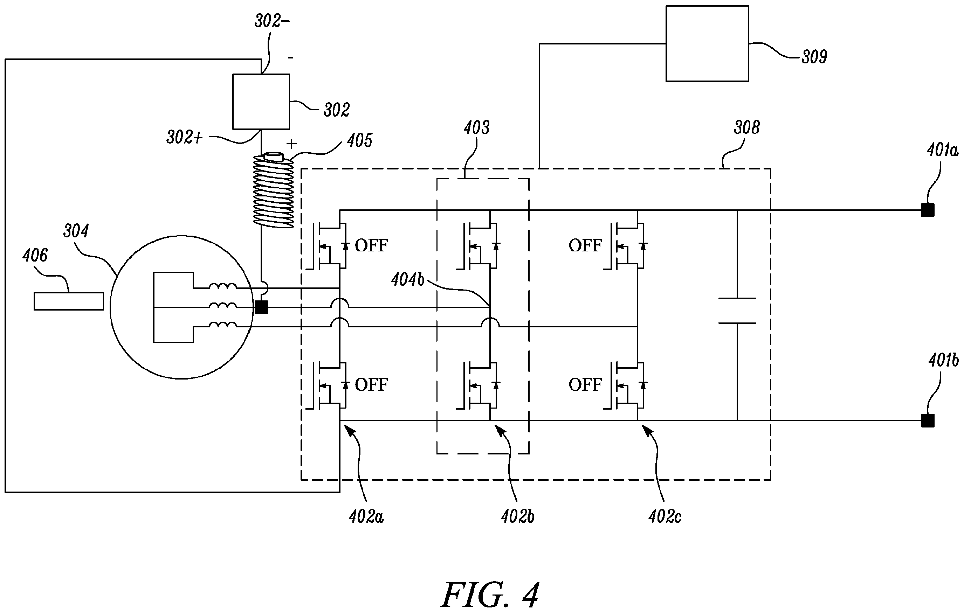

Figure 4 illustrates an example converter 308 connected to an electric motor 304 and battery 302 and configured to operate as a DC:DC converter to convert the DC supply provided by the battery 302 to a higher level DC supply across input connections 401a, 401b of the converter 308. The converter 308 may operate as the second converter 308 in the assembly 300 of Figure 3.

The motor 304 is a three-phase motor, which is driven by three corresponding switching circuits 402a-c. Each switching circuit 402a-c comprises a pair of switches comprising a diode and a power FET connected in parallel, with each FET being controlled by switching signals provided by the switching controller 309. One of the switching circuits 402b is configured to operate as a boost converter 403 when the converter 308 is operating as a DC:DC converter in the configuration illustrated in Figure 4, while the other switching circuits 402a, 402c are disabled. The motor 304 may be locked in position with a mechanical lock 406 in this configuration. To allow for the converter 308 to operate as a DC:DC converter, a first terminal 302+ of the battery 302, in this case the positive terminal 302+, is connected to a node 404b between the pair of switches in the switching circuit 402b via an inductor 405, while a second terminal 302- of the battery 302 remains connected to a second input connection 401b of the converter 308. In the example shown in Figure 4, the inductor 405 is provided as a separate component and no current flows through the motor windings due to the other switching circuits 402a, 402c being off.

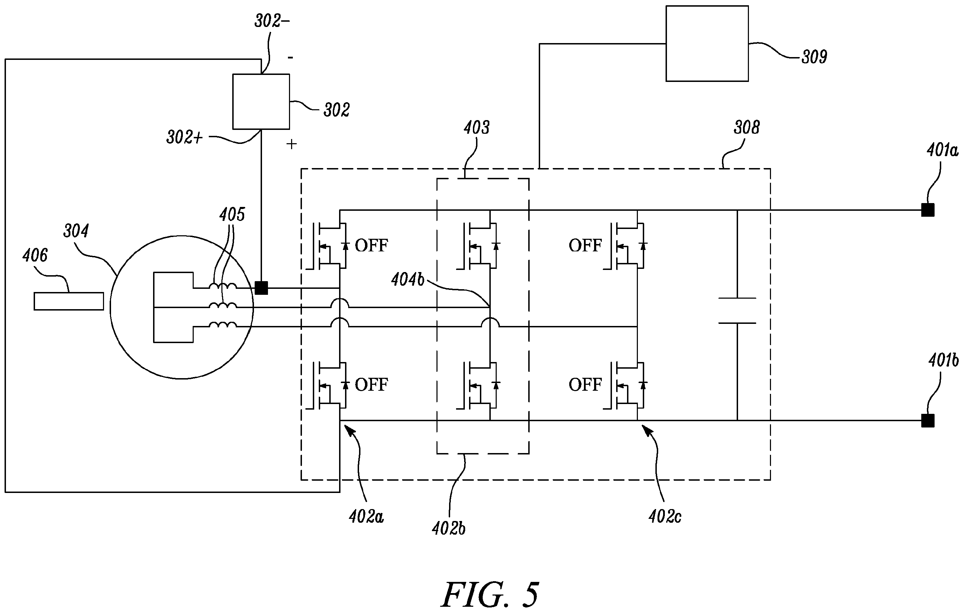

In alternative arrangements, the required inductance may be provided by one or more of the stator windings of the motor 304, for example as shown in Figure 5. The positive terminal 302+ of the battery 302 in the example in Figure 5 is connected to the node 404b between the pair of switches in the switching circuit 402b via two stator windings 405 of the three-phase motor 304, the windings 405 acting as the required inductance. Other numbers of windings could be used to provide the inductance depending on the value required. The parameters of the motor 304, such as slot dimensions and number of turns, may be adjusted to provide the inductance required for operating the converter 308 in the DC:DC converter mode.

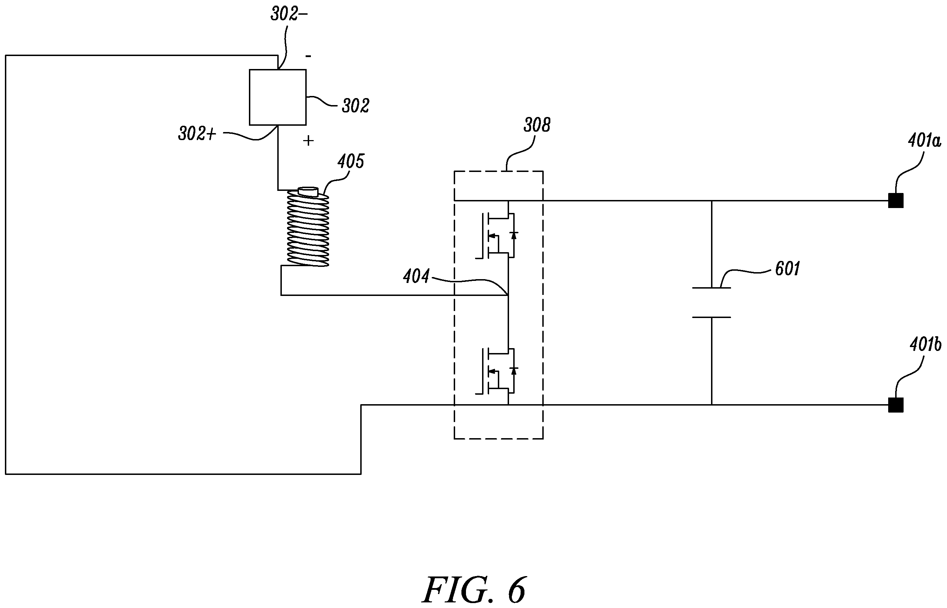

Figure 6 illustrates a simplified schematic diagram of the converter 308 and its connection to the battery 302, showing the principle features enabling operation of the converter 308 in the DC:DC converter configuration. A first terminal 302+ of the battery 302 is connected via an inductor 405 to the node 404 between the pair of switches in the switching circuit connected between first and second input terminals 401a, 401b of the converter 308, while a second terminal 302- of the battery 302 is connected to a second input terminal 401b of the converter. A capacitor 601 is connected between the input terminals 401a, 401b to smooth the DC voltage across the terminals 401a, 401b.

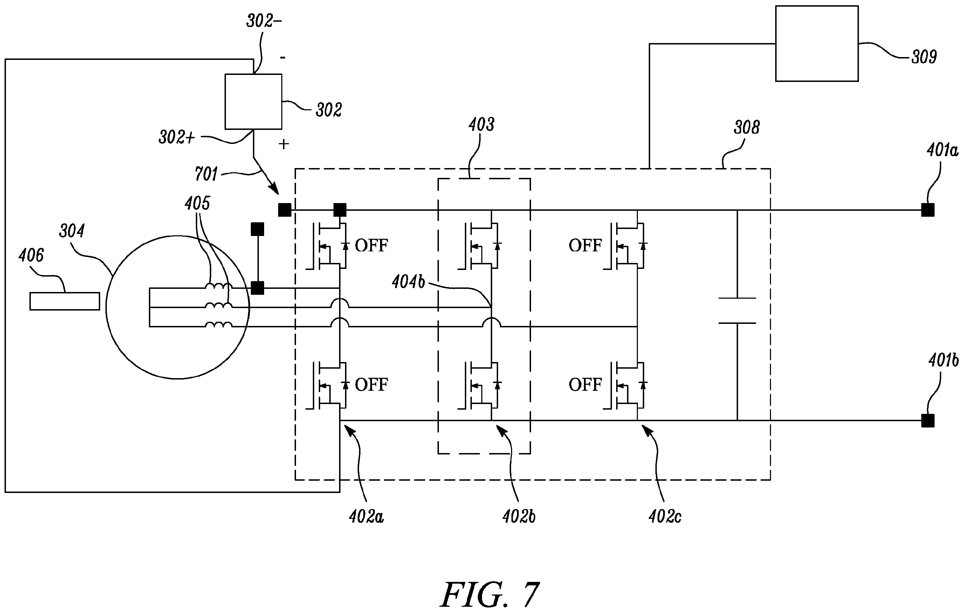

Switching the converter 308 between DC:AC and DC:DC configuration may be achieved using a switching arrangement of the type illustrated in Figure 7, which shows the arrangement in Figure 5 described above with a switch 701 that, in a first position, connects the first terminal 302+ of the battery 302 to the first terminal 401a of the converter 308 and, in a second position, connects the first terminal 302+ of the battery 302 to the node 404b between the pair of switches of the switching circuit 402b via an inductor 405, which in this example is provided by two stator windings of the motor 304. The controller 309 is configured to control the operation of switch 701 and the switching operations of the switching circuits 402a-c to provide DC:AC or DC:DC conversion depending on the mode of operation. The controller 309 operates in a first mode in which the second converter 308 is in the first DC:AC configuration, and in a second mode in which the second converter 308 is in the second DC:DC configuration.

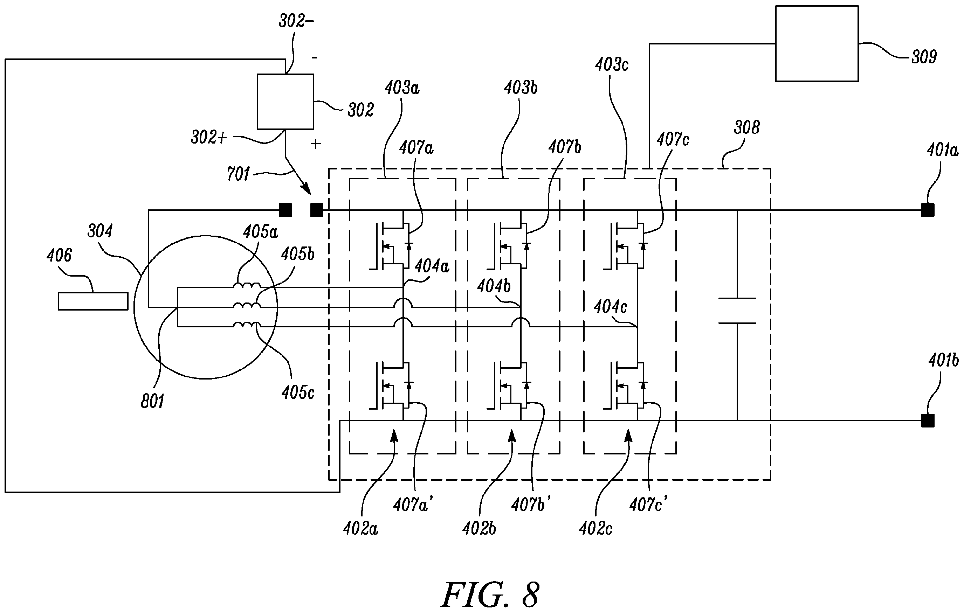

In examples shown in Figures 4-7, the converter 308 in the DC:DC configuration is dedicated to one phase. One switching circuit 402b must therefore have a power rating capable of carrying the full power that is fed to the first motor 303 during the cruise phase. To improve the power rating of the DC:DC converter 308, alternative configurations may be employed such as that illustrated in Figure 8 using interleaved switching circuits 402a-c. Figure 8 shows a similar arrangement to that in Figure 7, in which each of the switching circuits 402a-c act as a boost converter 403a-c and the neutral point of the three-phase motor 304 can be used as an electrical connection to the battery 302. In a first position, the switch 701 connects the first terminal 302+ of the battery 302 to the first terminal 401a of the converter. In a second position, the switch 701 connects the first terminal 302+ of the battery 302 to nodes 404a-c on respective switching circuits 402a-c via an inductor 405, which in this example is provided by the three stator windings 405a-c of the motor 304. An advantage of this arrangement is that switching of the three boost converters 403a-c can be interleaved such that the current drawn from the battery 302 has less electrical ripple, which reduces or eliminates the need for additional harmonic filtering hardware at the connection to the battery. The interleaving configuration also increases the power rating of the converter 308 as power transfer is shared between the switching circuits 402a-c. The controller 309 may be operated in the first or second modes of operation to switch between the first and second configurations of the converter 308 in which the converter is operated as a DC:AC or DC:DC converter.

The power rating of the converter 308 may also be increased by the addition of external inductors 405 to the example in Figure 4, enabling the use of the switching circuits 402a, 402c as boost converters in addition to 402b.

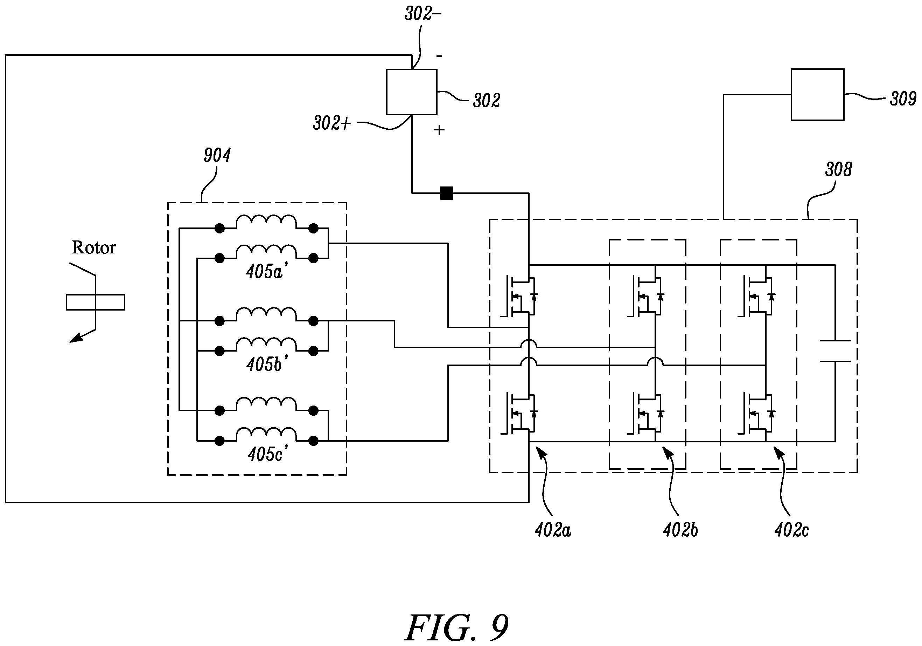

The motors 303, 304 illustrated in Figure 3 may be designed such that the windings 405 have two parallel paths which may be joined at the AC output terminals. Figure 9 illustrates a typical DC:AC converter in which a dual wound motor 904 is driven by the DC:AC converter 308, the dual wound motor 904 comprising three sets of parallel windings 405a'-c'. As before, the switching operation of the pairs of circuits 402a-c is controlled by switching signals provided by the controller 309.

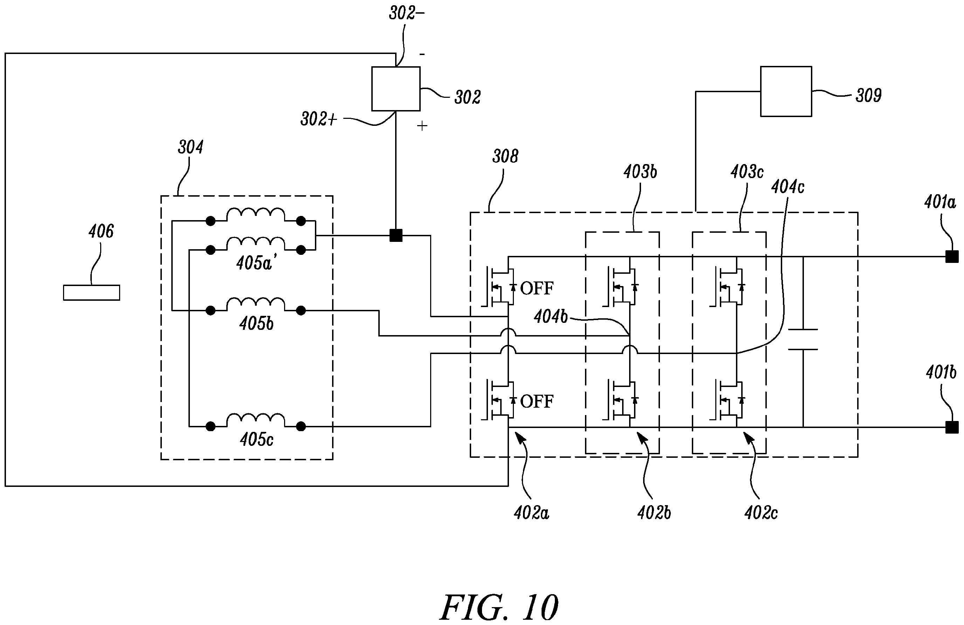

Figure 10 illustrates an assembly with a dual wound motor being used as two DC:DC converters. The first terminal 302+ of the battery 302 is connected to the nodes 404b, 404c between the pairs of switches in switching circuits 402b, 402c via the inductor 405, which in this case provided by dual winding 405a' and single windings 405b-c, and the second terminal 302- is connected to the terminal 401b. This arrangement enables two switching circuits 402b, 402c to be used as boost converters, which doubles the amount of power the converter 308 in the DC:DC configuration can process when compared to arrangement of Figure 7 in the DC:DC configuration.

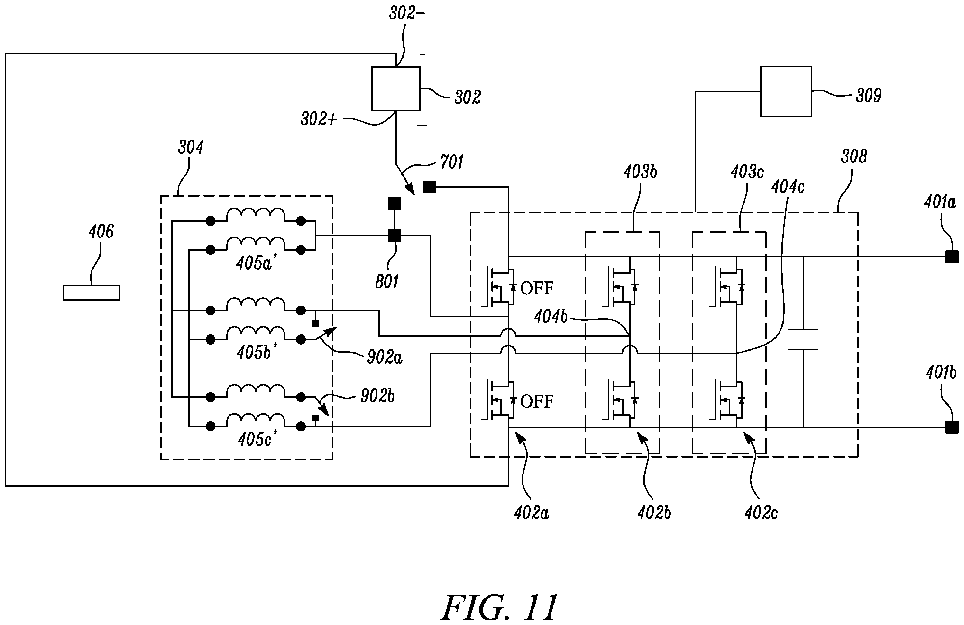

Figure 11 illustrates a configuration which allows switching between a three-phase DC:AC converter and two parallel DC:DC converters with parallel windings as shown in Figure 9 and Figure 10, the assembly 300 further comprising additional switches 902a,b within the motor 405. For the three-phase DC:AC configuration, the switch 701 in a first position connects the first output terminal 302+ of the battery 302 to the first terminal 401a of the converter, and switches 902a, 902b are closed. In a configuration that supports two parallel DC:DC converters, the switch 701 in a second position connects the first output terminal 302+ of the battery 302 to nodes 404b, 404c between the pairs of switches in switching circuits 402b, 402c respectively via the inductor windings 405a'-c' when additional switches 902a, 902b are open. The controller 309 is configured to operate the switches 701, 902a-b and the switching circuits 402a-c. The controller 309 may be operated in the first or second modes of operation to switch between the first and second configurations of the converter 308 in which the converter is operated as a DC:AC or DC:DC converter.

Similarly to the example in Figure 8, in the DC:DC mode of operation of the example in Figure 11, the switching circuits 402a-c may alternatively be employed as interleaved boost converters by using the neutral point of the motor as an electrical connection to the battery 302.

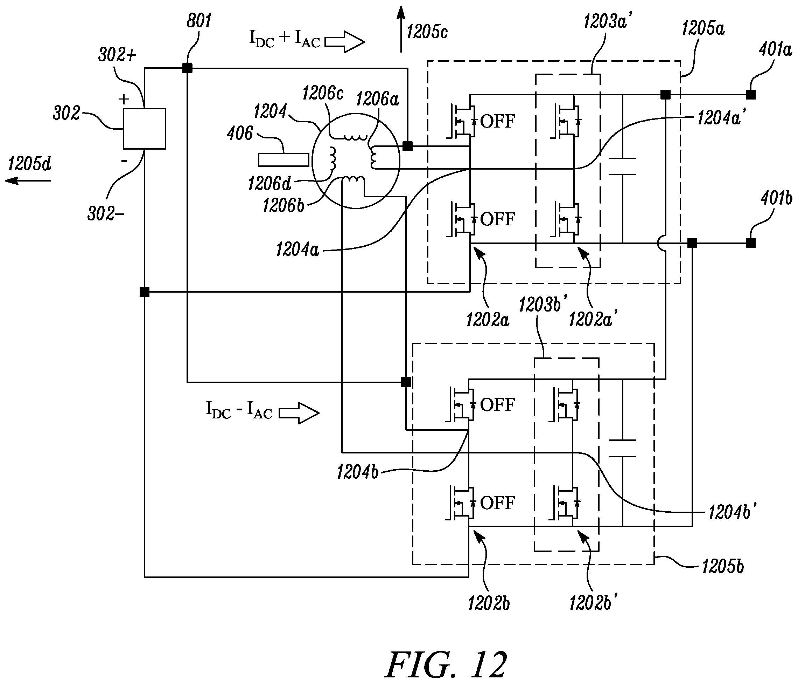

Figure 12 illustrates an example using H-bridge converters in a DC:DC configuration, in which the controller (not shown in Figure 12) is configured to operate in the second mode. In this example, each H-bridge converter 1205a, 1205b, 1205c, 1205d, only two out of four of which are illustrated, is connected to a corresponding winding 1206a, 1206b of the motor 1204. Each converter 1205a comprises two switching circuits 1202a, 1202a', one of which is operated as a boost converter in the DC:DC configuration connected to corresponding windings 1206a-d in the motor 304. The first terminal 302+ of the battery 302 is connected to the windings in the DC:DC configuration. The second terminal 302- of the battery is connected to the terminal 401b of the converter 308. As in other examples, the controller is configured to operate in a first mode in which the converters 1205a, 1205b each act as a DC:AC converter and in a second mode in which the converters 1205a, 1205b each act as a DC:DC converter.

The H-bridge configuration illustrated in Figure 12 is also a way of increasing the power rating of the example illustrated in Figure 7. In addition, interleaving of switching of the individual H-bridges may be employed which has the advantage of reducing the AC ripple current drawn from the battery 302. The AC component of the battery current in one phase may be minimised, or cancelled completely, by drawing the opposite AC current by a neighbouring phase by interleaving the pulse width modulation (PWM) switching patterns of the pairs of switching circuits acting as boost converters 1203a'-d'.

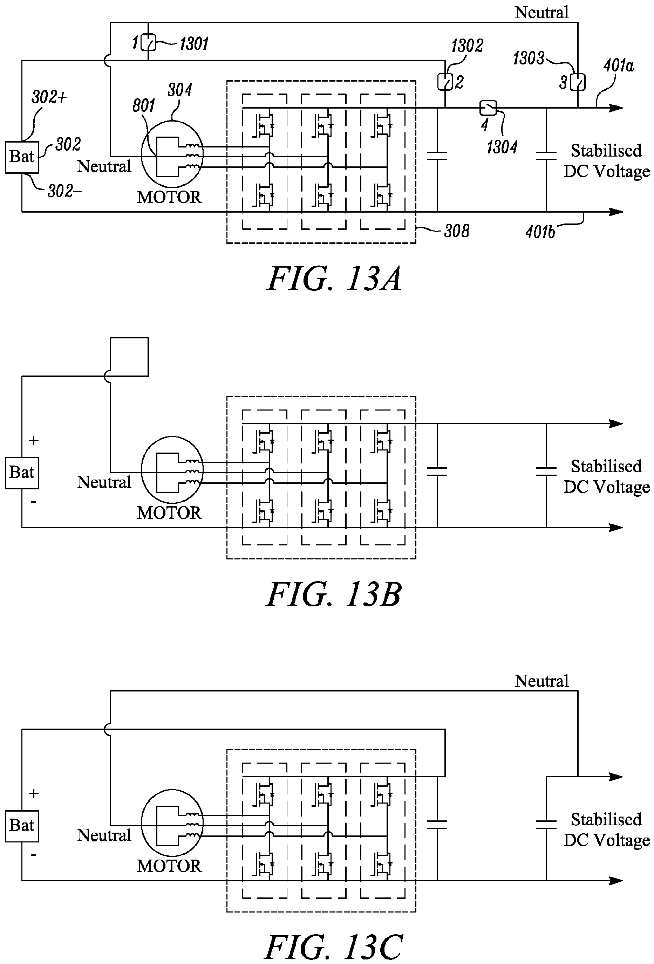

The configurations described above with reference to Figures 4 to 12 enable the converter to operate as a DC:DC boost converter, i.e. where the output DC voltage level is higher than the input DC voltage level. For a boost converter, the required inductance is provided between the battery and the converter. In alternative configurations where a lower DC output voltage may be required, the converter may instead be configured as a buck converter, in which the required inductance is provided on the output side of the converter. To enable this, an alternative switching arrangement to allow the converter to switch between DC:AC conversion and DC:DC conversion may be configured as illustrated in Figure 13a. The arrangement is similar to that of Figures 7 and 8, but with first, second third and fourth switches 1301-1304 provided that allow the converter 308 to be placed either side of the inductor relative to the battery 302, the inductor in this case being provided by windings of the motor 304. The first switch 1301 switchably connects the first terminal 302+ of the battery 302 to a node 801 common to the plurality of windings of the motor 304. The second switch 1302 switchably connects the first terminal 302+ to a first side of the fourth switch 1304, a second side of the fourth switch 1304 being connected to the first input terminal 401a of the converter 308. The first input terminal 401a is switchably connected to the node 801 with the third switch 1303. In a general aspect therefore, the switching arrangement 1301-1304 enables a first DC:DC configuration in which the first terminal 302+ of the battery 302 is connected to the converter 308 via the motor windings and a second DC:DC configuration in which the input terminal 401a is connected to the converter 308 via the motor windings.

The first DC:DC configuration is illustrated schematically in Figure 13B, which is enabled by the first and fourth switches 1301, 1304 being closed and the second and third switches 1302, 1303 open. The converter can be operated as a boost converter in this configuration, i.e. in which the DC voltage level provided by the battery is boosted to a higher DC level across the input terminals 401a, 401b. The second DC:DC configuration is illustrated schematically in Figure 13C, which is enabled by the first and fourth switches 1301, 1304 being open and the second and third switches 1302, 1303 being closed. The converter can be operated as a buck converter in this configuration, i.e. in which the DC voltage level provided by the battery is converted to a lower DC level across the input terminals 401a, 401b.

In either of the first and second DC:DC configurations, the switching circuits of the converter 308 may be operated using interleaving as described above in relation to Figure 8. The converter may also be used to provide appropriate stator winding currents for electromechanical braking.

To operate the converter as a DC:AC converter to drive the motor 304, the first and third switches 1301, 1303 are open and the second and fourth switches 1302, 1304 closed. The configuration is then equivalent to that illustrated in Figure 7 with the switch 701 in the first position, i.e. connecting the first terminal 302+ of the battery 302 to the first input terminal 401a.

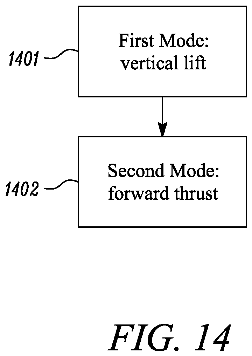

Figure 14 illustrates schematically an example method of operating an electric vertical takeoff and landing aircraft comprising a plurality of electric aircraft propulsion assemblies of the type described herein. In a first step 1401, the controller operates in a first mode, i.e. a vertical takeoff mode, in which the first and second converters 307, 308 are operated as DC:AC converters to drive the first and second electric motors 303, 304 to provide vertical lift. Once the aircraft has reached a required elevation, the method proceed to step 1402 where the controller transitions to operating in a second mode by continuing to operate the first converter 307 to provide forward thrust while the second converter 308 is operated as a DC:DC converter to maintain a required DC voltage supply level to the first converter 307. It will be appreciated that the steps 1401, 1402 of the method may be reversed for vertical landing, i.e., the aircraft may first be operating in the second mode for cruise and then transition to the first mode for vertical landing.

It should be appreciated that each assembly described herein is not limited to having only one first converter and second converter with associated motors and propulsors, but may have multiple first converters and/or multiple second converters and may have a different number of first converters to second converters depending on the required application. The assembly may for example have a higher number of second converters given that lift will require greater power input than forward cruise. Also, the number of motors driven by each converter may be more than one, and the number of phases of each motor may be other than three (e.g., four). A single electric storage unit may be connected to more than one assembly, allowing for power sharing between different assemblies to improve fault tolerance and reconfigurability.

Other embodiments not disclosed herein are also within the scope of the invention, which is defined by the appended claims.

## Claims

1. An electric aircraft propulsion assembly (300) comprising:
an electric storage unit (302);
a first electric motor (303) connected to power a first propulsor (305);
a first converter (307) configured as a DC:AC converter having input connections connectable to the electric storage unit (302) and output connections connected across the first electric motor (303), the first converter (307) configured to convert a DC supply across the input connections to an AC supply across the output connections;
a second electric motor (304) connected to power a second propulsor (306);
a second converter (308) connected between the first converter input connections and the second electric motor (304); and
a controller (309) configured to control operation of the first and second converters (307, 308),
**characterised in that**
the second converter (308) is switchable between:
a first configuration in which the second converter (308) is configured as a DC:AC converter to convert the DC supply from the electric storage unit (302) to an AC supply across the second electric motor (304); and
a second configuration in which the second converter (308) is configured as a DC:DC converter to convert the DC supply from the electric storage unit (302) at a first DC level to a DC supply at the input connections of the first converter (307) at a second DC level.

2. The electric aircraft propulsion assembly (300) of claim 1, wherein the second converter (308) comprises a switching circuit (402b) connected between input terminals (401a, 401b) of the second converter (308), a first terminal (302+) of the electric storage unit (302) being connected to the switching circuit (402b) via an inductor (405) when the second converter (308) is in the second configuration and to a first one (401a) of the input terminals when the second converter (308) is in the first configuration.

3. The electric aircraft propulsion assembly (300) of claim 2, wherein the inductor (405) is provided by one or more stator windings of the second electric motor (304).

4. The electric aircraft propulsion assembly (300) of claim 2 or claim 3, comprising a switching arrangement (701, 1301-1304) that, in a first configuration, connects the first terminal (302+) of the electric storage unit (302) to the first input terminal (401a) of the second converter (308) and, in a second configuration, connects the first terminal (302+) of the electric storage unit (302) to the switching circuit (402b) via the inductor (405), the controller (309) configured to operate the switching arrangement (701, 1301-1304) to switch the second converter (308) between the first and second configurations.

5. The electric aircraft propulsion assembly (300) of claim 1, wherein the second electric motor (304) comprises a plurality of windings (405a-c) and the second converter (308) comprises a respective plurality of switching circuits (402a-c) and first and second input terminals (401a, 401b), the assembly (300) further comprising a switching arrangement (701, 1301-1304) that, in a first configuration, connects a first terminal (302+) of the electric storage unit (302) to the first input terminal (401a) of the second converter (308) when the second converter (308) is in the first configuration and, in a second configuration, connects the first terminal (302+) of the electric storage unit (302) to a node (801) common to the plurality of windings (405a-c), a second terminal (302-) of the electric storage unit (302) remaining connected to the second input terminal (401b).

6. The electric aircraft propulsion assembly (300) of claim 4 or claim 5, wherein the switching arrangement comprises a switch (701) operable between a first position in the first configuration and a second position in the second configuration.

7. The electric aircraft propulsion assembly (300) of claim 5, wherein the switching arrangement (1301-1304) is configured in the second configuration to enable a first DC:DC configuration in which the first terminal (302+) of the battery (302) is connected to the second converter (308) via the plurality of motor windings and a second DC:DC configuration in which the input terminal (401a) is connected to the second converter (308) via the plurality of motor windings.

8. The electric aircraft propulsion assembly (300) of any one of claims 4 to 7, wherein each of the plurality of switching circuits (402a-c) comprises a pair of switches (407a-c, 407a'-c'), a node (404a-c) between each pair of switches (407a-c, 407a'-c') being connected to a respective one of the plurality of windings (405a-c).

9. The electric aircraft propulsion assembly (300) of claim 8, wherein one or more of the plurality of windings comprises a pair of parallel windings (405a'-c'), optionally wherein one or more of the pairs of parallel windings (405a'-c') are switchably connectable together.

10. The electric aircraft propulsion assembly (300) of claim 5, wherein each of the plurality of switching circuits comprises an H-bridge converter (1205a-b) connected to a respective one of the plurality of windings (1206a-b).

11. An electric vertical takeoff and landing, eVTOL, aircraft (100) comprising an electric aircraft propulsion assembly (300) according to any preceding claim, wherein the aircraft (100) is configured to operate in the first configuration to provide lift from the second propulsor (306) and in the second configuration to provide forward thrust from the first propulsor (305).

12. The eVTOL aircraft (100) of claim 11, wherein in the first configuration both the first propulsor (305) and the second propulsor (306) provide lift.

13. The eVTOL aircraft (100) of claim 11 or claim 12, comprising a plurality of the electric aircraft propulsion assemblies (300), wherein the aircraft (100) is configured to operate in the first configuration to provide lift from each of the second propulsors (306) and in the second configuration to provide forward thrust from the first propulsors (305).

14. A method of operating an electric aircraft propulsion assembly (300), comprising:
an electric storage unit (302);
a first electric motor (303) connected to power a first propulsor (305);
a first converter (307) configured as a DC:AC converter having input connections connectable to the electric storage unit (302) and output connections connected across the first electric motor (303), the first converter (307) configured to convert a DC supply across the input connections to an AC supply across the output connections;
a second electric motor (304) connected to power a second propulsor (306);
a second converter (308) connected between the first converter input connections and the second electric motor (304); and
a controller (309) configured to control operation of the first and second converters (307, 308),
the method comprising:
operating the controller (309) in a first mode in which the second converter (308) is configured as a DC:AC converter to convert the DC supply from the electric storage unit (302) to an AC supply across the second electric motor (304); and
operating the controller (309) in a second mode in which the second converter (308) is configured as a DC:DC converter to convert the DC supply from the electric storage unit (302) at a first DC level to a DC supply at the input connections of the first converter (307) at a second DC level.

15. The method of claim 14, wherein the second DC level is higher than the first DC level.

## Patentansprüche

1. Elektrische Luftfahrzeugantriebsbaugruppe (300), umfassend:
eine elektrische Speichereinheit (302);
einen ersten Elektromotor (303), der verbunden ist, um einen ersten Antrieb (305) mit Leistung zu versorgen;
einen ersten Wandler (307), der als ein DC-AC-Wandler konfiguriert ist, der Eingangsverbindungen, die mit der elektrischen Speichereinheit (302) verbindbar sind, und Ausgangsverbindungen, die über den ersten Elektromotor (303) verbunden sind, aufweist, wobei der erste Wandler (307) dazu konfiguriert ist, eine DC-Versorgung über die Eingangsverbindungen in eine AC-Versorgung über die Ausgangsverbindungen umzuwandeln;
einen zweiten Elektromotor (304), der verbunden ist, um einen zweiten Antrieb (306) mit Leistung zu versorgen;
einen zweiten Wandler (308), der zwischen den Eingangsverbindungen des ersten Wandlers und dem zweiten Elektromotor (304) verbunden ist; und
eine Steuerung (309), die dazu konfiguriert ist, einen Betrieb des ersten und des zweiten Wandlers (307, 308) zu steuern,
**dadurch gekennzeichnet, dass**
der zweite Wandler (308) zwischen Folgendem umschaltbar ist:
einer ersten Konfiguration, in der der zweite Wandler (308) als ein DC-AC-Wandler konfiguriert ist, um die DC-Versorgung von der elektrischen Speichereinheit (302) in eine AC-Versorgung über den zweiten Elektromotor (304) umzuwandeln; und
einer zweiten Konfiguration, in der der zweite Wandler (308) als ein DC-DC-Wandler konfiguriert ist, um die DC-Versorgung von der elektrischen Speichereinheit (302) auf einem ersten DC-Pegel in eine DC-Versorgung an den Eingangsverbindungen des ersten Wandlers (307) auf einem zweiten DC-Pegel umzuwandeln.

2. Elektrische Luftfahrzeugantriebsbaugruppe (300) nach Anspruch 1, wobei der zweite Wandler (308) einen Schaltkreis (402b) umfasst, der zwischen Eingangsanschlüssen (401a, 401b) des zweiten Wandlers (308) verbunden ist, ein erster Anschluss (302+) der elektrischen Speichereinheit (302) mit dem Schaltkreis (402b) über einen Induktor (405) verbunden ist, wenn sich der zweite Wandler (308) in der zweiten Konfiguration befindet, und mit einem ersten (401a) der Eingangsanschlüsse verbunden ist, wenn sich der zweite Wandler (308) in der ersten Konfiguration befindet.

3. Elektrische Luftfahrzeugantriebsbaugruppe (300) nach Anspruch 2, wobei der Induktor (405) durch eine oder mehrere Statorwicklungen des zweiten Elektromotors (304) bereitgestellt ist.

4. Elektrische Luftfahrzeugantriebsbaugruppe (300) nach Anspruch 2 oder Anspruch 3, umfassend eine Schaltanordnung (701, 1301-1304), die in einer ersten Konfiguration den ersten Anschluss (302+) der elektrischen Speichereinheit (302) mit dem ersten Eingangsanschluss (401a) des zweiten Wandlers (308) verbindet und in einer zweiten Konfiguration den ersten Anschluss (302+) der elektrischen Speichereinheit (302) mit dem Schaltkreis (402b) über den Induktor (405) verbindet, wobei die Steuerung (309) dazu konfiguriert ist, die Schaltanordnung (701, 1301-1304) so zu betätigen, dass sie den zweiten Wandler (308) zwischen der ersten und der zweiten Konfiguration umschaltet.

5. Elektrische Luftfahrzeugantriebsbaugruppe (300) nach Anspruch 1, wobei der zweite Elektromotor (304) eine Vielzahl von Wicklungen (405a-c) umfasst und der zweite Wandler (308) eine jeweilige Vielzahl von Schaltkreisen (402a-c) und erste und zweite Eingangsanschlüsse (401a, 401b) umfasst, wobei die Baugruppe (300) ferner eine Schaltanordnung (701, 1301-1304) umfasst, die in einer ersten Konfiguration einen ersten Anschluss (302+) der elektrischen Speichereinheit (302) mit dem ersten Eingangsanschluss (401a) des zweiten Wandlers (308) verbindet, wenn sich der zweite Wandler (308) in der ersten Konfiguration befindet, und in einer zweiten Konfiguration den ersten Anschluss (302+) der elektrischen Speichereinheit (302) mit einem Knoten (801) verbindet, der der Vielzahl von Wicklungen (405a-c) gemeinsam ist, wobei ein zweiter Anschluss (302-) der elektrischen Speichereinheit (302) mit dem zweiten Eingangsanschluss (401b) verbunden bleibt.

6. Elektrische Luftfahrzeugantriebsbaugruppe (300) nach Anspruch 4 oder Anspruch 5, wobei die Schaltanordnung einen Schalter (701) umfasst, der zwischen einer ersten Position in der ersten Konfiguration und einer zweiten Position in der zweiten Konfiguration betätigbar ist.

7. Elektrische Luftfahrzeugantriebsbaugruppe (300) nach Anspruch 5, wobei die Schaltanordnung (1301-1304) in der zweiten Konfiguration dazu konfiguriert ist, eine erste DC-DC-Konfiguration, in der der erste Anschluss (302+) der Batterie (302) mit dem zweiten Wandler (308) über die Vielzahl von Motorwicklungen verbunden ist, und eine zweite DC-DC-Konfiguration, in der der Eingangsanschluss (401a) mit dem zweiten Wandler (308) über die Vielzahl von Motorwicklungen verbunden ist, zu ermöglichen.

8. Elektrische Luftfahrzeugantriebsbaugruppe (300) nach einem der Ansprüche 4 bis 7, wobei jeder der Vielzahl von Schaltkreisen (402a-c) ein Paar Schalter (407a-c, 407a'-c') umfasst, wobei ein Knoten (404a-c) zwischen jedem Paar Schalter (407a-c, 407a'-c') mit jeweils einer der Vielzahl von Wicklungen (405a-c) verbunden ist.

9. Elektrische Luftfahrzeugantriebsbaugruppe (300) nach Anspruch 8, wobei eine oder mehrere der Vielzahl von Wicklungen ein Paar paralleler Wicklungen (405a'-c') umfasst, wobei optional eines oder mehrere der Paare paralleler Wicklungen (405a'-c') schaltbar miteinander verbindbar sind.

10. Elektrische Luftfahrzeugantriebsbaugruppe (300) nach Anspruch 5, wobei jeder der Vielzahl von Schaltkreisen einen H-Brücken-Wandler (1205a-b) umfasst, der mit einer jeweiligen der Vielzahl von Wicklungen (1206a-b) verbunden ist.

11. Elektrisches vertikal startendes und landendes Luftfahrzeug, eVTOL-Luftfahrzeug, (100), eine elektrische Luftfahrzeugantriebsbaugruppe (300) nach einem vorhergehenden Anspruch umfassend, wobei das Luftfahrzeug (100) dazu konfiguriert ist, in der ersten Konfiguration so zu arbeiten, dass es Auftrieb von dem zweiten Antrieb (306) bereitstellt, und in der zweiten Konfiguration so zu arbeiten, dass es Vorschub von dem ersten Antrieb (305) bereitstellt.

12. eVTOL-Luftfahrzeug (100) nach Anspruch 11, wobei in der ersten Konfiguration sowohl der erste Antrieb (305) als auch der zweite Antrieb (306) Auftrieb bereitstellen.

13. eVTOL-Luftfahrzeug (100) nach Anspruch 11 oder Anspruch 12, eine Vielzahl elektrischer Luftfahrzeugantriebsbaugruppen (300) umfassend, wobei das Luftfahrzeug (100) dazu konfiguriert ist, in der ersten Konfiguration so zu arbeiten, dass es Auftrieb von jedem der zweiten Antriebe (306) bereitstellt, und in der zweiten Konfiguration so zu arbeiten, dass es Vorschub von den ersten Antrieben (305) bereitstellt.

14. Verfahren zum Betreiben einer elektrischen Luftfahrzeugantriebsbaugruppe (300), umfassend:
eine elektrische Speichereinheit (302);
einen ersten Elektromotor (303), der verbunden ist, um einen ersten Antrieb (305) mit Leistung zu versorgen;
einen ersten Wandler (307), der als ein DC-AC-Wandler konfiguriert ist, der Eingangsverbindungen, die mit der elektrischen Speichereinheit (302) verbindbar sind, und Ausgangsverbindungen, die über den ersten Elektromotor (303) verbunden sind, aufweist, wobei der erste Wandler (307) dazu konfiguriert ist, eine DC-Versorgung über die Eingangsverbindungen in eine AC-Versorgung über die Ausgangsverbindungen umzuwandeln;
einen zweiten Elektromotor (304), der verbunden ist, um einen zweiten Antrieb (306) mit Leistung zu versorgen;
einen zweiten Wandler (308), der zwischen den Eingangsverbindungen des ersten Wandlers und dem zweiten Elektromotor (304) verbunden ist; und
eine Steuerung (309), die dazu konfiguriert ist, einen Betrieb des ersten und des zweiten Wandlers (307, 308) zu steuern,
wobei das Verfahren Folgendes umfasst:
Betreiben der Steuerung (309) in einem ersten Modus, in dem der zweite Wandler (308) als ein DC-AC-Wandler konfiguriert ist, um die DC-Versorgung von der elektrischen Speichereinheit (302) in eine AC-Versorgung über den zweiten Elektromotor (304) umzuwandeln; und
Betreiben der Steuerung (309) in einem zweiten Modus, in dem der zweite Wandler (308) als ein DC-DC-Wandler konfiguriert ist, um die DC-Versorgung von der elektrischen Speichereinheit (302) auf einem ersten DC-Pegel in eine DC-Versorgung an den Eingangsverbindungen des ersten Wandlers (307) auf einem zweiten DC-Pegel umzuwandeln.

15. Verfahren nach Anspruch 14, wobei der zweite DC-Pegel höher als der erste DC-Pegel ist.

## Revendications

1. Ensemble propulsif électrique (300) d'aéronef comprenant :
une unité de stockage électrique (302) ;
un premier moteur électrique (303) connecté pour alimenter un premier propulseur (305) ;
un premier convertisseur (307) configuré en tant que convertisseur CC:CA comportant des connexions d'entrée connectables à l'unité de stockage électrique (302) et des connexions de sortie connectées au premier moteur électrique (303), le premier convertisseur (307) étant configuré pour convertir une alimentation CC aux bornes des connexions d'entrée en alimentation CA aux bornes des connexions de sortie ;
un second moteur électrique (304) connecté pour alimenter un second propulseur (306) ;
un second convertisseur (308) connecté entre les connexions d'entrée de premier convertisseur et le second moteur électrique (304) ; et
un dispositif de commande (309) configuré pour commander le fonctionnement des premier et second convertisseurs (307, 308),
**caractérisé en ce que**
le second convertisseur (308) est commutable entre :
une première configuration dans laquelle le second convertisseur (308) est configuré en tant que convertisseur CC:CA pour convertir l'alimentation CC en provenance de l'unité de stockage électrique (302) en une alimentation CA aux bornes du second moteur électrique (304) ; et
une seconde configuration dans laquelle le second convertisseur (308) est configuré en tant que convertisseur CC:CC pour convertir l'alimentation CC de l'unité de stockage électrique (302) à un premier niveau CC en une alimentation CC au niveau des connexions d'entrée du premier convertisseur (307) à un second niveau CC.

2. Ensemble propulsif électrique (300) d'aéronef selon la revendication 1, ledit second convertisseur (308) comprenant un circuit de commutation (402b) connecté entre des bornes d'entrée (401a, 401b) du second convertisseur (308), une première borne (302+) de l'unité de stockage électrique (302) étant connectée au circuit de commutation (402b) par l'intermédiaire d'un inducteur (405) lorsque le second convertisseur (308) est dans la seconde configuration et à une première (401a) des bornes d'entrée lorsque le second convertisseur (308) est dans la première configuration.

3. Ensemble propulsif électrique (300) d'aéronef selon la revendication 2, ledit inducteur (405) étant fourni par un ou plusieurs enroulements de stator du second moteur électrique (304).

4. Ensemble propulsif électrique (300) d'aéronef selon la revendication 2 ou la revendication 3, comprenant un agencement de commutation (701, 1301-1304) qui, dans une première configuration, connecte la première borne (302+) de l'unité de stockage électrique (302) à la première borne d'entrée (401a) du second convertisseur (308) et, dans une seconde configuration, connecte la première borne (302+) de l'unité de stockage électrique (302) au circuit de commutation (402b) par l'intermédiaire de l'inducteur (405), le dispositif de commande (309) étant configuré pour faire fonctionner l'agencement de commutation (701, 1301-1304) afin de commuter le second convertisseur (308) entre les première et seconde configurations.

5. Ensemble propulsif électrique (300) d'aéronef selon la revendication 1, ledit second moteur électrique (304) comprenant une pluralité d'enroulements (405a-c) et ledit second convertisseur (308) comprenant une pluralité respective de circuits de commutation (402a-c) et des première et seconde bornes d'entrée (401a, 401b), l'ensemble (300) comprenant en outre un agencement de commutation (701, 1301-1304) qui, dans une première configuration, connecte une première borne (302+) de l'unité de stockage électrique (302) à la première borne d'entrée (401a) du second convertisseur (308) lorsque le second convertisseur (308) est dans la première configuration et, dans une seconde configuration, connecte la première borne (302+) de l'unité de stockage électrique (302) à un noeud (801) commun à la pluralité d'enroulements (405a-c), une seconde borne (302-) de l'unité de stockage électrique (302) restant connectée à la seconde borne d'entrée (401b).

6. Ensemble propulsif électrique (300) d'aéronef selon la revendication 4 ou la revendication 5, ledit agencement de commutation comprenant un commutateur (701) actionnable entre une première position dans la première configuration et une seconde position dans la seconde configuration.

7. Ensemble propulsif électrique (300) d'aéronef selon la revendication 5, ledit agencement de commutation (1301-1304) étant configuré dans la seconde configuration pour permettre une première configuration CC:CC dans laquelle la première borne (302+) de la batterie (302) est connectée au second convertisseur (308) par l'intermédiaire de la pluralité d'enroulements de moteur et une seconde configuration CC:CC dans laquelle la borne d'entrée (401a) est connectée au second convertisseur (308) par l'intermédiaire de la pluralité d'enroulements de moteur.

8. Ensemble propulsif électrique (300) d'aéronef selon l'une quelconque des revendications 4 à 7, chacun de la pluralité de circuits de commutation (402a-c) comprenant une paire de commutateurs (407a-c, 407a'-c'), un noeud (404a-c) entre chaque paire de commutateurs (407a-c, 407a'-c') étant connecté à l'un respectif de la pluralité d'enroulements (405a-c).

9. Ensemble propulsif électrique (300) d'aéronef selon la revendication 8, un ou plusieurs de la pluralité d'enroulements comprenant une paire d'enroulements parallèles (405a'-c'), éventuellement une ou plusieurs des paires d'enroulements parallèles (405a'-c') pouvant être connectées ensemble de manière commutable.

10. Ensemble propulsif électrique (300) d'aéronef selon la revendication 5, chacun de la pluralité de circuits de commutation comprenant un convertisseur en pont en H (1205a-b) connecté à un enroulement respectif de la pluralité d'enroulements (1206a-b).

11. Aéronef électrique à décollage et atterrissage vertical, eVTOL (100), comprenant un ensemble propulsif électrique (300) d'aéronef selon une quelconque revendication précédente, ledit aéronef (100) étant configuré pour fonctionner dans la première configuration pour fournir une portance à partir du second propulseur (306) et dans la seconde configuration pour fournir une poussée vers l'avant à partir du premier propulseur (305).

12. Aéronef eVTOL (100) selon la revendication 11, dans la première configuration, ledit premier propulseur (305) et ledit second propulseur (306) assurant la portance.

13. Aéronef eVTOL (100) selon la revendication 11 ou la revendication 12, comprenant une pluralité d'ensembles propulsif électrique (300) d'aéronef, ledit aéronef (100) étant configuré pour fonctionner dans la première configuration pour fournir une portance à partir de chacun des seconds propulseurs (306) et dans la seconde configuration pour fournir une poussée vers l'avant à partir des premiers propulseurs (305).

14. Procédé de fonctionnement d'un ensemble propulsif électrique (300) d'aéronef, comprenant :
une unité de stockage électrique (302) ;
un premier moteur électrique (303) connecté pour alimenter un premier propulseur (305) ;
un premier convertisseur (307) configuré en tant que convertisseur CC:CA comportant des connexions d'entrée connectables à l'unité de stockage électrique (302) et des connexions de sortie connectées au premier moteur électrique (303), le premier convertisseur (307) étant configuré pour convertir une alimentation CC aux bornes des connexions d'entrée en alimentation CA aux bornes des connexions de sortie ;
un second moteur électrique (304) connecté pour alimenter un second propulseur (306) ;
un second convertisseur (308) connecté entre les connexions d'entrée de premier convertisseur et le second moteur électrique (304) ; et
un dispositif de commande (309) configuré pour commander le fonctionnement des premier et second convertisseurs (307, 308),
le procédé comprenant :
le fonctionnement du dispositif de commande (309) dans un premier mode dans lequel le second convertisseur (308) est configuré en tant que convertisseur CC:CA pour convertir l'alimentation CC en provenance de l'unité de stockage électrique (302) en une alimentation CA aux bornes du second moteur électrique (304) ; et
le fonctionnement du dispositif de commande (309) dans un second mode dans lequel le second convertisseur (308) est configuré en tant que convertisseur CC:CC pour convertir l'alimentation CC de l'unité de stockage électrique (302) à un premier niveau CC en une alimentation CC au niveau des connexions d'entrée du premier convertisseur (307) à un second niveau CC.

15. Procédé selon la revendication 14, ledit second niveau CC étant supérieur au premier niveau CC.
